# EUROPEAN PATENT APPLICATION

(11) **EP 2 322 567 A1**
(43) Date of publication of application: **18.05.2011**
(21) Application number: 09175490.3
(22) Date of filing: 10.11.2009
(51) Int. Cl.: C08F 10/00, C08F 4/24

(54) **Process for the polymerisation of olefins**

(71) Applicant: INEOS EUROPE LIMITED, Lyndhurst Hampshire SO43 7FG (GB)
(72) Inventor: The designation of the inventor has not yet been filed
(74) Representative: King, Alex

(57) **Abstract**

The present invention relates to a process for polymerisation of olefins, in particular gas phase polymerisation of olefins, with the aid of a supported chromium oxide based catalyst.

## Description

The present invention relates to a process for polymerisation of olefins, in particular gas phase polymerisation of olefins, with the aid of a supported chromium oxide based catalyst.

In particular, the present invention relates to a process for polymerisation of olefins, in particular gas phase polymerisation of olefins, with the aid of a supported chromium oxide based catalyst which has been subjected to a two-steps activation method.

WO2008074467 discloses a process for producing chromium catalysts, comprising the steps of: a) applying one or more chromium compound(s) to a finely divided inorganic support to form a catalyst precursor, b) thermally treating the catalyst precursor, the step of thermally treating the catalyst precursor being carried out for at least part of the time in an oxidizing atmosphere and in such a manner that a maximum temperature of from 350C to 1050C is not exceeded, wherein the duration of the thermal treatment step at a temperature of above 300C is at least 1500 minutes.

Whilst, as exemplified by the prior art in the field, it is common general knowledge to produce polymers in gas phase in the presence of supported chromium oxide based catalyst, the man skilled in the art is still trying to obtain polymers with the right combination of product properties, particularly properties appropriate for pipe purposes, while still having a high productivity and avoiding production problems, e.g. fines and/or temperature upsets. Therefore, it would be desirable to obtain a resin product with desirable properties, e.g., sufficiently high Environmental Stress Crack Resistance (ESCR), high Creep behaviour and high resistance against rapid crack propagation with the right melt index (MI), while also achieving high catalyst activity, in particular using a gas phase process, more particularly a fluidized bed gas phase process.

It is therefore an objective of the present invention to provide a process for preparing ethylene (co-) polymers, preferably in gas phase, having high Environmental Stress Crack Resistance (ESCR) and high Creep behaviour in the presence of a supported chromium oxide based catalyst having good activity.

The subject of the invention is therefore a process for the polymerisation, preferably the gas phase polymerisation, of at least one alpha olefin containing from 2 to 12 carbon atoms in the presence of a supported chromium oxide based catalyst characterised in that
- the supported chromium oxide based catalyst is a titanium modified supported chromium oxide based catalyst;
- the chromium oxide based catalyst is supported on a spherical and/or spheroidal refractory oxide ; and
- the titanium modified supported chromium oxide based catalyst has been subjected to a 2 steps thermal treatment wherein
   o the first step consists in bringing the catalyst under an inert atmosphere to a temperature comprised between 600 and 900°C and then keeping the catalyst during a holding time comprised between 0 minutes and 8 hours under an inert atmosphere at a temperature comprised between 600 and 900°C, and
   o the second step consists in the activation treatment of the catalyst coming from step 1 under an oxidizing atmosphere, preferably air, at a temperature comprised between 400 and 700 °C during a holding time comprised between 2 and 10 hours, and
   o wherein the maximum temperature of step 2 is always lower than the maximum temperature of step 1 and wherein the difference between the maximum temperature of step 1 and the maximum temperature of step 2 is comprised between 50 and 200 °C.

According to the present invention, the raw catalyst or the activated catalyst itself is not contacted with an alkylboron compound before or during (co-) polymerization. Thus, the present invention does not contemplate the activation of our catalyst by a cocatalyst such as with an alkylboron.

The spherical and/or spheroidal refractory oxide support for the chromium oxide based catalyst used in the process of the present invention can preferably be silica, alumina, aluminophosphate, metal oxides such as oxides of titanium, zirconium, boron, zinc, magnesium, and the like, or combinations thereof; more preferably, it essentially consists of silica.

In general, the support has a specific surface area ranging from 100 to 800 m2 /g, measured according to the BET volumetric method in British Standard BS 4359/1 (1984). Preferably, the specific surface area ranges from 400 to 600 m2 /g.

Moreover, the support generally has a pore volume higher than 1 mL/g, more preferably higher than 2 mL/g and more preferably, the pore volume is higher than 2.5 mL/g. The term "pore volume" should be understood to mean the pore volume measured according to the nitrogen penetration method (BET) with reference to British Standard BS 4359/1 (1984).

The chromium oxide based catalyst deposited on a support used in the process according to the invention usually contains approximately 0.3 to 2% by weight and even more particularly 0.3 to 1% by weight of chromium, more preferably between 0.3 and 0.7 % by weight of chromium, most preferably between 0.4 and 0.6% by weight of chromium (these weights being expressed with respect to the weight of final supported catalyst). Of course, it is possible to use the catalyst as a blend of 2 different or more different catalysts, at least one on them being defined as hereinabove. It is also possible to use the catalyst as a blend of 2 different or more different catalysts, this blend containing a chromium loading in average defined as hereinabove.

Any known chromium containing compounds capable of reacting with the surface hydroxyl groups of the refractory oxide can be used in the process of preparation of the catalyst. Non-limiting examples of such compounds include chromium nitrate, chromium trioxide, chromate esters such as chromium acetate, chromium acetylacetonate and t-butyl chromate, silyl chromate esters and phosphorous-containing esters, chromium chloride, chromium sulphate and ammonium chromate.

The introduction mode of this chromium compound can be a dry mixing in or outside the activator or a non-aqueous impregnation of the support but preferably an impregnation of the support with an aqueous solution of a soluble chromium compound such as CrO3 or chromium acetate is used.

Any known titanium containing compound capable of reacting with the surface hydroxyl groups of the refractory oxide can be used in the process of preparation of the catalyst. These compounds include those having the structures (R)mTi(OR')n and (RO)mTi(OR')n where m is 1, 2, 3 or 4; n is 0, 1, 2 or 3 and m + n = 4, and where R and R' are a C1 to C12 alkyl, aryl, cycloalkyl group, cyclopentadienyl, C2 to C12 alkenyl groups and combination thereof These compounds also include those having the structures TiX4 wherein X is chlorine, bromine, fluorine or iodine. The titanium compound can be solid, liquid or in solution in an hydrocarbon solvent.

The introduction mode of the titanium compound can be a dry mixing in or outside the activator or an impregnation of the support with a hydrocarbon solution of the titanium compound. The catalyst used in the process according to the invention usually contains between 0.5 and 5 % by weight of titanium, most preferably between 1.5 and 4 %, most preferably between 2 and 4 %, most preferably between 2 and 3 % (these weights being expressed with respect to the weight of final supported catalyst).

The preferred method of preparation of the catalyst used in the present invention is not important as long as it has the chromium content, the titanium content and the spherical and/or spheroidal morphology as defined hereinabove; also, according to the present invention, it is essential that the titanation of the catalyst is not done by the cogel method. The present invention preferably consists exclusively in the support of the titanium as defined hereinabove and/or by the impregnation method.

For the purpose of the present invention and appended claims, spheroidal shape means shaped like a sphere but not perfectly round, especially an ellipsoid shape that is generated by revolving one or more ellipse around one of its axes.

Thus, for the purpose of the present invention and appended claims, by "spherical and/or spheroidal refractory oxide", it is meant that the refractory oxide particles used for the preparation of the catalyst used in the present invention exhibit a spherical and/or spheroidal shape morphology. Such spherical and/or spheroidal morphology of said particles is usually identified by taking microscopy pictures of said particles; this is currently how the man skilled in the art can identify the presence of a spherical and/or spheroidal refractory oxide.

According to the present invention, the titanium modified supported chromium oxide based catalyst is then subjected to a 2 steps thermal treatment wherein
o the first step consists in bringing the catalyst under an inert atmosphere to a temperature comprised between 600 and 900°C and then keeping the catalyst during a holding time comprised between 0 minutes and 8 hours, more particularly between 0 minutes and 6 hours, more particularly between 0 minutes and 4 hours and more particularly between 0 minutes and 2 hours and even more particularly between 30 minutes and 1.5 hours under an inert atmosphere at a temperature comprised between 600 and 900°C. More preferably the range of temperature described in this first step is comprised between 650 and 850 °C and more preferably comprised between 700 and 800 °C and even more preferable between 730 and 770 °C, and
o the second step consists in the activation treatment of the catalyst coming from step 1 under an oxidizing atmosphere, preferably air, at a temperature comprised between 400 and 700 °C during a holding time comprised between 2 and 10 hours, more particularly between 3 hours and 9 hours, more particularly between 4 hours and 8 hours and more particularly between 5 hours and 7 hours. More preferably the range of temperature described in this second step is comprised between 500 and 700 °C and more preferably comprised between 600 and 700 °C and even more preferable between 630 and 670 °C, and
o wherein the maximum temperature of step 2 is always lower than the maximum temperature of step 1 and wherein the difference between the maximum temperature of step 1 and the maximum temperature of step 2 is comprised between 50 and 200 °C, more preferably between 50 and 150 °C and more preferably between 80 and 120 °C.

Step 1 according to the present invention is performed under an inert atmosphere, preferably under nitrogen, more preferably under dry nitrogen. Any additional thermal treatment steps could also be performed before our step 1 as claimed hereinabove. However, it is preferred according to the present invention that the titanium modified supported chromium oxide based catalyst is not subjected to any other thermal treatment step at a temperature above 150 °C before our step 1 as claimed in the present invention.

It is preferred according to the present invention that step 2 is performed directly after step 1 without any additional intermediate thermal treatment step.
After our claimed step 2 activation treatment, the activated catalyst is then preferably cooled with the same oxidizing atmosphere from step 2, preferably air, to a temperature between 400 °C and 300 °C and further cooled from this temperature to room temperature with inert atmosphere, preferably nitrogen, more preferably dry nitrogen.

Also, according to the present invention, it is preferred that the total duration of any thermal treatment (non oxidising and oxidising steps) above 300 °C of our titanium modified supported chromium oxide based catalyst is always less than 24 hours, preferably less than 22 hours, more preferably less 20 hours and even more preferably less than 18 hours.

It is obvious for the man skilled in the art that the thermal treatments according to the present invention can be performed continuously or in batch in any appropriate reactor. For continuous mode operations, a configuration with at least two reactors in series is preferred, one reactor operating under an inert atmosphere for our claimed step 1 and one reactor operating under an oxidising atmosphere for our claimed step 2.

According to an embodiment of the present invention, the 2 thermal treatment steps are performed in batch mode in the same reactor, preferably in a fluidized bed reactor.

According to another embodiment of the present invention, the step of bringing the catalyst under an inert atmosphere to a temperature comprised between 600 and 900°C is performed by introducing the said catalyst into a reactor and gradually increasing the temperature of the reactor with a thermal speed rate comprised between 1 and 2.5 °C/min until the desired temperature is reached.

According to the invention, the supported chromium catalysts modified with titanium having undergone the successive heat treatments in nitrogen and in air, under suitable conditions of temperature and duration, are used for the polymerization of ethylene or for its copolymerization with C3 to C8 olefins. By way of examples of olefins that can be used as comonomers, mention may be made of propylene, 1-butene, 4-methyl-1-pentene, 1-hexene,1-octene, 1-decene, 1-dodecene, styrene, and derivatives thereof. Of course, several olefins may be used simultaneously, particularly 1-butene and/or 1-hexene and/or 1-octene.

The process according to the invention applies particularly well to the manufacture of ethylene (co-) polymers but more particularly ethylene (co-) polymers having, after compounding:
- a density between 936 and 941 Kg/m3 and a MI5 between 0.5 and 1.2 dg/min and the pipes produced with this polymer meet the requirements of ISO 4427 and ISO 4437 in hydrostatic pressure testing at 20°C and 9.0 MPa with a ductile failure at more than 100 hours, or
- a density between 942 and 946 Kg/m3 and a MI5 between 0.4 and 0.6 dg/min and the pipes produced with this polymer meet the requirements of ISO 4427 and ISO 4437 in hydrostatic pressure testing at 20°C and 9.0 MPa with a ductile failure at more than 100 hours, or
- a density between 943 and 947 Kg/m3 and a MI5 between 0.1 and 0.4 dg/min and the pipes made from this polymer and tested in hydrostatic pressure test at 20°C under 12.0 MPa will have a time to failure at more than 100h,
the above hydrostatic pressure testing being made following ISO1167-1 and 2.

The (co)polymerization is carried out, in a known manner, by bringing ethylene and, optionally, other olefins into contact with the catalyst under polymerizing conditions known per se. According to the present invention, the (co)polymerization of the ethylene is preferably carried out in the gas phase. Indeed, the Applicants have unexpectedly found that it was possible to obtain a resin product with desirable properties, e.g., sufficiently high Environmental Stress Crack Resistance (ESCR) and high Creep behaviour, with the right melt index (MI), while also achieving high catalyst activity, by using a gas phase process, in particular a fluidized bed gas phase process. Indeed, the ethylene (co)polymers produced according to the process of the present invention exhibit an excellent compromise between processability, slow crack and creep behaviour. They may be used in any conventional process for converting thermoplastics, such as, for example, pipe extrusion, blow moulding and blown film. They are very suitable for pipe extrusion.

The present invention also provides ethylene (co-) polymers but more particularly (co-) polymers having, after compounding:
- a density between 936 and 941 Kglm3 and a MI5 between 0.5 and 1.2 dg/min and the pipes produced with this polymer meet the requirements of ISO 4427 and ISO 4437 in hydrostatic pressure testing at 20°C and 9.0 MPa with a ductile failure at more than 100 hours, or
- a density between 942 and 946 Kg/m3 and a MI5 between 0.4 and 0.6 dg/min and the pipes produced with this polymer meet the requirements of ISO 4427 and ISO 4437 in hydrostatic pressure testing at 20°C and 9.0 MPa with a ductile failure at more than 100 hours, or
- a density between 943 and 947 Kg/m3 and a MI5 between 0.1 and 0.4 dg/min and the pipes made from this polymer and tested in hydrostatic pressure test at 20°C under 12.0 MPa will have a time to failure at more than 100h,
the above hydrostatic pressure testing being made following ISO1167-1 and 2, characterised in that the polymer is obtainable by a polymerisation process, preferably a gas phase polymerisation process, of at least one alpha olefin containing from 2 to 12 carbon atoms in the presence of a supported chromium oxide based catalyst wherein
- the supported chromium oxide based catalyst is a titanium modified supported chromium oxide based catalyst;
- the chromium oxide based catalyst is supported on a spherical and/or spheroidal refractory oxide; and
- the titanium modified supported chromium oxide based catalyst has been subjected to a 2 steps thermal treatment wherein
   o the first step consists in bringing the catalyst under an inert atmosphere to a temperature comprised between 600 and 900°C and maintaining the catalyst during a holding time comprised between 0 minutes and 8 hours under an inert atmosphere at a temperature comprised between 600 and 900°C, and
   o the second step consists in the activation treatment of the catalyst coming from step 1 under an oxidizing atmosphere, preferably air, at a temperature comprised between 400 and 700 °C during a time comprised between 2 and 10 hours, and
   o wherein the maximum temperature of step 2 is always lower than the maximum temperature of step 1 and wherein the difference between the maximum temperature of step 1 and the maximum temperature of step 2 is comprised between 50 and 200 °C.
The example which follows is intended to illustrate the process of the invention.

In a fluidized bed reactor, 15 g of the catalyst PQC35105 were subjected to the following thermal treatment:
- increase of temperature up to 750 °C with a thermal speed rate of 1.5 °C/min under nitrogen flow ;
- keeping temperature at 750 °C and keeping nitrogen flow during 1 hour ;
- decrease of temperature up to 650 °C under nitrogen flow ;
- at 650 °C switch from nitrogen flow to air flow ;
- keeping temperature at 650 °C and keeping air flow during 6 hours ;
- decrease of temperature up to 350 °C under air flow ;
- at 350 °C switch from air flow to nitrogen flow ;
- decrease of temperature up to ambient temperature under nitrogen flow ;
- the catalyst was recovered under nitrogen and stored under nitrogen in a glove box before to be use for ethylene polymerization.

After a correct clean-up, 500 g of polyethylene pellets were introduced into a stainless steel reactor of capacity 5 litres equipped with a stirrer. Then the reactor was closed, heated at 100 °C, stirred at 70 rpm and placed under vacuum during 1 hour. Then vacuum was stopped and replaced with nitrogen and the reactor was placed overnight under nitrogen flow at 100 °C. Then the nitrogen flow was stopped and the reactor, stored under nitrogen and stirred at 300 rpm, was ready for the polymerization.

Next step was the addition of 150 mg of poison scavenger prepared with the silica 948 from the Grace Company treated under nitrogen flow at 600 °C during 5 hours and with 1.5 mmole/g of triethylaluminium.

Then the reactor was placed at 93 °C and 15 minutes after the poison scavenger addition, 260 mg of the C35105 catalyst prepared as described above, was added. Then 3 bars of hydrogen was introduced in the reactor. Then ethylene and hexene were introduced to reach 7 bars of ethylene and a ratio hexene/ethylene of 1.2 mol/mol% controlled by mass spectrometry. Ethylene and hexene were fed during the reaction to maintain the reactor pressure constant and to maintain the ratio of hexene/ethylene of 1.2 mol/mol% always controlled by mass spectrometry.

The duration of the polymerization was 119 min during which period 654 g of polyethylene. This corresponds to a productivity of 2515 g/g and a catalytic activity of 181 g/g/h/b. The reactor content was cooled to 25 °C and were then recovered from the reactor. A sieve with 2 mm diameter mesh was used to separate the polyethylene pellets from the powder formed during the reaction. The recovered polymer powder had the following properties:
Melt Index MI5 = 0.6
Density MVS = 938.5 Kg/m3
Melt index MI5 is measured using to standard ISO 1133 at a temperature of 190 °C under load of 5 Kg.

Density is measured according to the standard ISO 1183-1 (Method A) and the sample plaque was prepared according to the standard ASTM D4703 (Condition C) where it was cooled under pressure at a cooling rate of 15 °C/min from 190 °C to 40 °C. The hydrostatic pressure testing mentioned above is described in standard ISO 1167-1 et ISO 1167-2.

## Claims

1. Process for the polymerisation, preferably the gas phase polymerisation, of at least one alpha olefin containing from 2 to 12 carbon atoms in the presence of a supported chromium oxide based catalyst **characterised in that**
- the supported chromium oxide based catalyst is a titanium modified supported chromium oxide based catalyst;
- the chromium oxide based catalyst is supported on a spherical and/or spheroidal refractory oxide; and
- the titanium modified supported chromium oxide based catalyst has been subjected to a 2 steps thermal treatment wherein
o the first step consists in bringing the catalyst under an inert atmosphere to a temperature comprised between 600 and 900°C and then keeping the catalyst during a holding time comprised between 0 minutes and 8 hours under an inert atmosphere at a temperature comprised between 600 and 900°C, and
o the second step consists in the activation treatment of the catalyst coming from step 1 under an oxidizing atmosphere, preferably air, at a temperature comprised between 400 and 700 °C during a holding time comprised between 2 and 10 hours, and
o wherein the maximum temperature of step 2 is always lower than the maximum temperature of step 1 and wherein the difference between the maximum temperature of step 1 and the maximum temperature of step 2 is comprised between 50 and 200 °C.

2. Process according to claim 1 wherein the spherical and/or spheroidal refractory oxide support for the chromium oxide based catalyst used in the process of the present invention is chosen amongst silica, alumina, aluminophosphate, metal oxides such as oxides of titanium, zirconium, boron, zinc, magnesium, and the like, or combinations thereof.

3. Process according to claim 2 wherein the spherical and/or spheroidal refractory oxide support consists of silica.

4. Process according to any of the preceding claims wherein the spherical and/or spheroidal refractory oxide support has a pore volume higher than 1 mL/g, preferably higher than 2 mL/g and more preferably higher than 2.5 mL/g.

5. Process according to any of the preceding claims wherein the spherical and/or spheroidal refractory oxide support has a specific surface area ranging from 100 to 800 m2 /g, preferably a specific surface area ranging from 400 to 600 m2 /g.

6. Process according to any of the preceding claims wherein the chromium oxide based catalyst contains 0.3 to 2% by weight of chromium, preferably 0.3 to 1% by weight of chromium, more preferably between 0.3 and 0.7 % by weight of chromium, and most preferably between 0.4 and 0.6% by weight of chromium.

7. Process according to any of the preceding claims wherein the chromium oxide based catalyst contains between 0.5 and 5 % by weight of titanium, preferably between 1.5 and 4 %, most preferably between 2 and 4 %, and most preferably between 2 and 3 % by weight of titanium.

8. Process according to any of the preceding claims wherein the holding time during the first thermal treatment is comprised between 0 minutes and 6 hours, particularly between 0 minutes and 4 hours and more particularly between 0 minutes and 2 hours and even more particularly between 30 minutes and 1.5 hours.

9. Process according to any of the preceding claims wherein the range of temperatures described in the first thermal treatment step is comprised between 650 and 850 °C, preferably comprised between 700 and 800 °C and more preferably between 730 and 770 °C.

10. Process according to any of the preceding claims wherein the activation treatment (step 2) has a holding time comprised between 3 hours and 9 hours, particularly between 4 hours and 8 hours and more particularly between 5 hours and 7 hours.

11. Process according to any of the preceding claims wherein the range of temperatures described in the activation treatment (step 2) is comprised between 500 and 700 °C, preferably comprised between 600 and 700 °C and more preferably between 630 and 670 °C.

12. Process according to any of the preceding claims wherein the maximum temperature of step 2 is always lower than the maximum temperature of step 1 and wherein the difference between the maximum temperature of step 1 and the maximum temperature of step 2 is comprised between 50 and 150 °C, more preferably between 80 and 120 °C.

13. Process according to any of the preceding claims wherein step 1 is performed under nitrogen.

14. Process according to any of the preceding claims wherein the total duration of any thermal treatment (non oxidising and oxidising steps) above 300 °C of our titanium modified supported chromium oxide based catalyst is always less than 24 hours, preferably less than 22 hours, more preferably less 20 hours and even more preferably less than 18 hours.

15. Ethylene (co-) polymers obtainable by a process according to any of the preceding claims wherein said ethylene (co-) polymers has the following properties after compounding:
- a density between 936 and 941 Kg/m3 and a MI5 between 0.5 and 1.2 dg/min and the pipes produced with this polymer meet the requirements of ISO 4427 and ISO 4437 in hydrostatic pressure testing at 20°C and 9.0 MPa with a ductile failure at more than 100 hours, or
- a density between 942 and 946 Kg/m3 and a MI5 between 0.4 and 0.6 dg/min and the pipes produced with this polymer meet the requirements of ISO 4427 and ISO 4437 in hydrostatic pressure testing at 20°C and 9.0 MPa with a ductile failure at more than 100 hours, or
- a density between 943 and 947 Kg/m3 and a MI5 between 0.1 and 0.4 dg/min and the pipes made from this polymer and tested in hydrostatic pressure test at 20°C under 12.0 MPa will have a time to failure at more than 100h.
